# EUROPÄISCHE PATENTSCHRIFT

(11) **EP 1 363 973 B1**
(45) Veröffentlichungstag und Bekanntmachung des Hinweises auf die Patenterteilung: **07.05.2008**
(21) Anmeldenummer: 01999605.7
(22) Anmeldetag: 26.11.2001
(51) Int. Cl.: C08K 5/523, C08K 5/00, C08L 69/00

(54) **FLAMMWIDRIGE WÄRMEFORMBESTÄNDIGE POLYCARBONAT-ZUSAMMENSETZUNGEN**
FLAMEPROOF POLYCARBONATE COMPOSITIONS RESISTANT TO THERMAL DEFORMATION
COMPOSITIONS POLYCARBONATE IGNIFUGES RESISTANT A LA DEFORMATION THERMIQUE

(30) Priorität: 08.12.2000 DE 10061078
(43) Veröffentlichungstag der Anmeldung: 26.11.2003
(73) Patentinhaber: Bayer MaterialScience AG, 51368 Leverkusen (DE)
(72) Erfinder: ECKEL, Thomas, 41540 Dormagen (DE); SEIDEL, Andreas, 41542 Dormagen (DE); WITTMANN, Dieter, 51375 Leverkusen (DE); PEUCKER, Uwe, Bridgeville, PA 15017 (US)
(86) Internationale Anmeldenummer: PCT/EP2001/013712
(87) Internationale Veröffentlichungsnummer: WO 2002/046289

(56) Entgegenhaltungen:
- EP-A- 0 936 244
- WO-A-00/58402
- WO-A-96/11977
- DE-A- 19 734 663
- DE-A- 19 914 139
- US-A- 6 127 465

## Beschreibung

Die vorliegende Erfindung betrifft mit Phosphorverbindungen flammwidrig ausgerüstete Polycarbonat-Zusammensetzungen, die ein ausgezeichnetes mechanisches Eigenschaftsniveau, eine hohe Wärmeformbeständigkeit einen verbesserten Flammschutz und verbessertes Fließverhalten (Verarbeitungsverhalten) aufweisen.

US-A 5 061 745 beschreibt Formmassen aus aromatischem Polycarbonat, Pfropfpolymerisat und Monophosphat. Diese Mischungen zeigen zwar ein gutes Fließverhalten und einen guten Flammschutz, haben jedoch häufig nicht die geforderte hohe Wärmeformbestständigkeit. Außerdem weisen Monophosphate aufgrund ihrer Flüchtigkeit nicht bestimmte Verarbeitungsbedingungen zur Wirkungbelagsbildung.

In EP-A 0 640 655 werden Formmassen aus aromatischem Polycarbonat, styrolhaltigen Copolymerisaten und Pfropfpolymerisaten beschrieben, die mit monomeren und/oder oligomeren Phosphorverbindungen flammwidrig ausgerüstet werden können. Aufgrund des Anteiles an monomeren Phosphorverbindungen können die vorgenannten Nachteile auftreten.

EP-A 747 424 beschreibt die Verwendung einer Kombination von Phosphat mit einem Molekulargewicht von ungefähr 500 bis 2 000 und von Phosphat mit einem Molekulargewicht von ungefähr 2 300 bis 11 000 als Flammschutzmittel in thermoplastischen Harzen, wobei eine Vielzahl von thermoplastischen Harzen aufgezählt wird. Wegen des hohen Molekulargewichtes der Flammschutzmittel sind Abstriche in der Flammschutzsicherung zu erwarten.

DE-A 197 34 663 offenbart flammwidrige Formmassen, die eine Mischung zweier Phosphorverbindungen enthalten, wobei eine der Phosphorverbindungen eine Biphenylgruppe aufweist.

In EP-A-0363608 werden flammwidrige Polymermischungen aus aromatischem Polycarbonat, styrolhaltigem Copolymer oder Pfropfcopolymer sowie einen oligomeren Phosphat als Flammschutzadditive beschrieben, worin häufig. die geforderte Eigenschaftskombination aus guten Flammschutz und guten Verarbeitungsverhalten nicht erreicht wird.

Aufgabe der vorliegenden Erfindung ist daher, Polycarbonat-Zusammensetzungen bereitzustellen, die einen verbesserten Flammschutz, eine hohe Wärmeformbestandigkeit und verbessertes Fließverhalten (Verarbeitungsverhalten) sowie gute mechanische Eigenschaften aufweisen.

Es wurde nun überraschenderweise gefunden, dass durch den Einsatz von Mischungen aus Oligophosphaten mit verschiedener Struktur Formmassen/Formkörper erhalten werden, die das gewünschte Eigenschaftsprofil aufweisen.

Gegenstand der vorliegenden Erfindung sind Zusammensetzungen enthaltend
I. mindestens 2 Komponenten ausgewählt aus der Gruppe der aromatischen Poly-(ester)carbonate, Pfropfpolymerisate von einem oder mehreren Vinylmonomeren auf eine oder mehrere Pfropfgrundlagen mit einer Glasübergangstemperatur <10°C, thermoplastischem Vinyl(co)polymerisat oder Polyalkylenterephthalat sowie
II. 0,5 bis 25 Gew.-Teile einer Mischung von Phosphorverbindungen enthaltend wenigstens eine Phosphorverbindung der Formel (I-a) 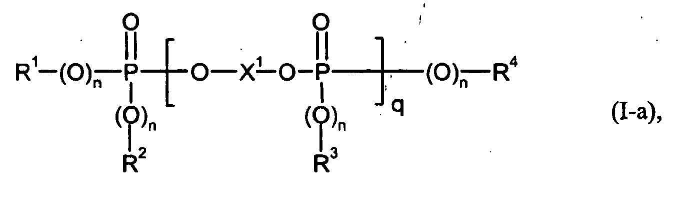 und wenigstens eine Phosphorverbindung der Formel (I-b) 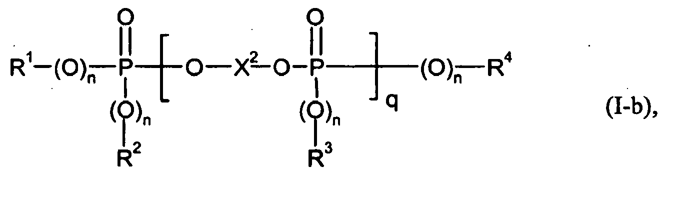
wobei X¹ und X² sich von Diphenolen der Formel (II) ableiten: 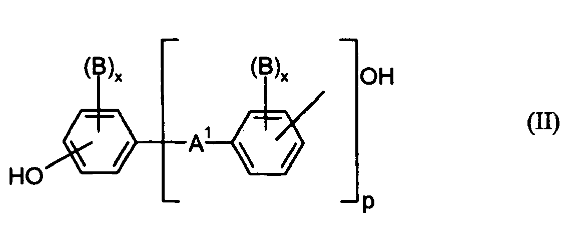 wobei
- A¹: C₁-C₅-Alkylen, C₂-C₅-Alkyliden, C₅-C₆-Cycloalkyliden, -O-, -SO-,-CO-, -S-, -SO₂-, C₆-C₁₂-Arylen, welches mit weiteren gegebenenfalls Heteroatome enthaltenden aromatischen Ringen kondensiert sein kann, oder ein Rest der Formel 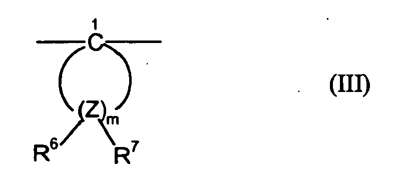 oder ein Rest der Formel (IV) 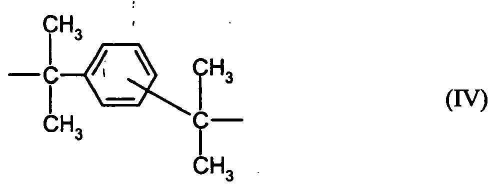 wobei
B unabhängig voneinander C₁-C₈-Alkyl, C₆-C₁₀-Aryl, C₇-C₁₂-Aralkyl,
x jeweils unabhängig voneinander 0, 1 oder 2,
p 1 oder 0 sind, und
R⁶ und R⁷ für jedes Z individuell wählbar, unabhängig voneinander, Wasserstoff oder C₁-C₆-Alkyl
Z Kohlenstoff und
m eine ganze Zahl von 4 bis 7 bedeuten, mit der Maßgabe, dass an mindestens einem Atom Z
R⁶ und R⁷ gleichzeitig Alkyl sind,
- R¹, R², R³ und R⁴: unabhängig voneinander, gegebenenfalls halogeniertes C₁-C₈-Alkyl, jeweils gegebenenfalls durch Halogen und/oder C₁-C₄-Alkyl substituiertes C₅-C₆-Cycloalkyl, C₆-C₂₀-Aryl oder C₇-C₁₂-Aralkyl,
- n: unabhängig voneinander 0 oder 1
- q: 0,5 bis 30 bedeuten,
mit der Maßgabe, dass X¹ oder X² oder ein oder mehrere R¹, R², R³ und R⁴ jeweils verschieden sind und wobei die Summe der Gewichtsteile aller Komponenten 100 beträgt.

Gegenstand der vorliegenden Erfindung sind vorzugsweise Zusammensetzungen enthaltend
A) 5 bis 95, vorzugsweise 10 bis 90 Gew.-Teile, besonders bevorzugt 20 bis 80 Gew.-Teile aromatisches Polycarbonat und/oder Polyestercarbonat
B) 1 bis 60, vorzugsweise 1 bis 40 Gew.-Teile, besonders bevorzugt 2 bis 30 Gew.-Teile, wenigstens eines Pfropfpolymerisats von
   B.1 5 bis 95, vorzugsweise 20 bis 60 Gew.-% einem oder mehreren Vinylmonomeren auf
   B.2 5 bis 95, vorzugsweise 40 bis 80 Gew.-% einem oder mehreren Pfropfgrundlagen mit einer Glasumwandlungstemperatur < 10°C, vorzugsweise 0°C, besonders bevorzugt < -20°C,
C) 0 bis 50, vorzugsweise 1 bis 30, besonders bevorzugt 2 bis 25, Gew.-Teile thermoplastisches Vinyl(co)polymerisat und/oder thermoplastisches Polyalkylenterephthalat
D) 0,5 bis 25 Gew.-Teile, vorzugsweise 1 bis 18 Gew.-Teile, besonders bevorzugt 2 bis 15 Gew.-Teile der oben gennannten Mischung von Phosphorverbindungen enthaltend wenigstens eine Phosphorverbindung der Formel (I-a) und wenigstens eine Phosphorverbindung der Formel (I-b),
E) 0,05 bis 5 Gew.-Teile, vorzugsweise 0,1 bis 1 Gew.-Teil, besonders bevorzugt 0,1 bis 0,5 Gew.-Teile, fluoriertes Polyolefin
mit der Maßgabe, dass die Zusammensetzung mindestens 2 Phosphorverbindungen der Formel (I) enthält, in denen X oder ein oder mehrere Reste R¹, R², R³ und R⁴ verschieden sind und wobei die Summe der Gewichtsteile der Komponenten A) + B) + C) + D) + E) und gegebenenfalls weiteren Additiven 100 beträgt.

### Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964, sowie die DE-AS 1 495 626, DE-OS 2 232 877, DE-A 2 703 376, DE-A 2 714 544, DE-A 3 000 610, DE-A 3 832 396; zur Herstellung aromatischer Polyestercarbonate z.B. DE-A 3 077 934).

Die Herstellung aromatischer Polycarbonate erfolgt z.B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen.

Diphenole zur Herstellung der aromatischen Polycarbonate und/oder aromatischen Polyestercarbonate sind vorzugsweise solche der Formel (II-a) 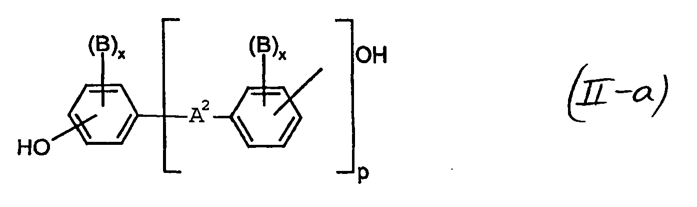 wobei
- A²: eine Einfachbindung, C₁-C₅-Alkylen, C₂-C₅-Alkyliden, C₅-C₆-Cycloalkyliden, -O-, -SO-, -CO-, -S-, -SO₂-, C₆-C₁₂-Arylen, welches mit weiteren gegebenenfalls Heteroatome enthaltenden aromatischen Ringen kondensiert sein kann, oder ein Rest der Formel 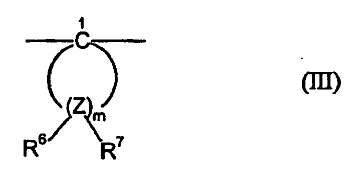 oder ein Rest der Formel (IV) 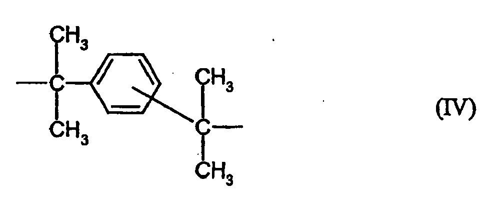
- B: unabhängig voneinander C₁-C₈-Alkyl, vorzugsweise C₁-C₄-Alkyl, insbesondere Methyl, Halogen, vorzugsweise Chlor und/oder Brom, C₆-C₁₀-Aryl, vorzugsweise Phenyl, C₇-C₁₂-Aralkyl, Phenyl-C₁-C₄-Alkyl, vorzugsweise Benzyl,
- x: jeweils unabhängig voneinander 0,1 oder 2,
- p: 1 oder 0 sind, und
- R⁶ und R⁷: für jedes Z individuell wählbar, unabhängig voneinander, Wasserstoff oder C₁-C₆-Alkyl, vorzugsweise Wasserstoff, Methyl und/oder Ethyl,
- Z: Kohlenstoff und
- m: eine ganze Zahl von 4 bis 7, bevorzugt 4 oder 5 bedeuten,
mit der Maßgabe, dass an mindestens einem Atom Z R⁶ und R⁷ gleichzeitig Alkyl sind.

Bevorzugte Diphenole sind Hydrochinon, Resorcin, 4,4'-Dihydroxydiphenyl, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α- Bis-(hydroxyphenyl)-diisopropyl-benzole wie deren kernbromierte und/oder kemchlorierte Derivate.

Besonders bevorzugte Diphenole sind 4,4'-Diphenylphenol, Bisphenol-A, 2,4- Bis-(4-hydroxyphenyl)-2-methylbutan, 1,1- Bis-(4-hydroxyphenyl)-cyclohexan, 1,1- Bis-(4-hydroxyphenyl)-3,3,5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis-(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan.

Insbesondere bevorzugt ist 2,2-Bis-(4-hydroxyphenyl)-propan (Bisphenol-A).

Es können die Diphenole einzeln oder als beliebige Mischungen eingesetzt werden.

Die Diphenole sind literaturbekannt oder nach literaturbekannten Verfahren erhältlich.

Für die Herstellung der thermoplastischen, aromatischen Polycarbonate sind geeignete Kettenabbrecher beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2 842 005 oder Monoalkylphenol bzw. Dialkylphenole mit insgesamt 8 bis 20 C-Atomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol-% und 10 Mol-%, bezogen auf die Molsumme der jeweils eingesetzten Diphenole.

Die thermoplastischen, aromatischen Polycarbonate haben mittlere Gewichtsmittelmolekulargewichte (M_{W}, gemessen z.B. durch Ultrazentrifuge oder Streulichtmessung) von 10 000 bis 200 000, vorzugsweise 20 000 bis 80 000.

Die thermoplastischen, aromatischen Polycarbonate können in bekannter Weise verzweigt sein, und zwar vorzugsweise durch den Einbau von 0,05 bis 2,0 Mol-%, bezogen auf die Summe der eingesetzten Diphenole, an Verbindungen mit 3 oder mehr funktionellen Gruppen, beispielsweise solchen mit drei oder mehr als drei phenolischen Gruppen.

Geeignet sind sowohl Homopolycarbonate als auch Copolycarbonate. Zur Herstellung erfindungsgemäßer Copolycarbonate als Komponente A können auch 1 bis 25 Gew.-%, vorzugsweise 2,5 bis 25 Gew.-% (bezogen auf die Gesamtmenge an einzusetzenden Diphenolen), Polydiorganosiloxane mit Hydroxy-aryloxy-Endgruppen eingesetzt werden. Diese sind bekannt (s. beispielsweise aus US-Patent 3 419 634) bzw. nach literaturbekannten Verfahren herstellbar. Die Herstellung Polydiorganosiloxanhaltiger Copolycarbonate wird z.B. in DE-OS 3 334 782 beschrieben.

Bevorzugte Polycarbonate sind neben den Bisphenol-A-Homopolycarbonaten die Copolycarbonate von Bisphenol-A mit bis zu 15 Mol-%, bezogen auf die Molsummen an Diphenolen, anderen als bevorzugt bzw. besonders bevorzugt genannten Diphenole, insbesondere an 2,2-Bis(3,5-dibrom-4-hydroxyphenyl)-propan.

Aromatische Dicarbonsäuredihalogenide zur Herstellung von aromatischen Polyestercarbonate sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mitverwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁-C₂₂-Alkylgruppen oder durch Halogenatome substituiert sein können sowie aliphatische C₂-C₂₂-Monocarbonsäurechloride in Betracht.

Die Menge an Kettenabbrechern beträgt jeweils 0,1 bis 10 Mol-%, bezogen im Falle der phenolischen Kettenabbrecher auf Mole Diphenole und im Falle von Monocarbonsäurechlorid-Kettenabbrechern auf Mole Dicarbonsäuredichloride.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu ebenfalls DE-OS 2 940 024 und DE-OS 3 007 934).

Als Verzweigungsmittel können beispielsweise 3- oder mehrfunktionelle Carbonsäurechloride, wie Trimesinsäuretrichlorid, Cyanursäuretrichlorid, 3,3'-4,4'-Benzophenon-tetracarbonsäuretetrachlorid, 1,4,5,8-Naphthalintetracarbonsäuretetrachlorid oder Pyromellithsäuretetrachlorid, in Mengen von 0,01 bis 1,0 Mol-% (bezogen auf eingesetzte Dicarbonsäuredichloride) oder 3- oder mehrfunktionelle Phenole, wie Phloroglucin, 4,6-Dimethyl-2,4,6-tri-(4-hydroxyphenyl)-hepten-2,4,4-Dimethyl-2,4,6-tri-(4-, hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxyphenyl)-cyclohexyl]-propan, 2,4-Bis-(4-hydroxyphenyl-isopropyl)-phenol, Tetra-(4-hydroxyphenyl)-methan, 2,6-Bis-(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis-[4,4'-dihydroxytri-phenyl)-methyl]-benzol, in Mengen von 0,01 bis 1,0 Mol-%, bezogen auf eingesetzte Diphenole, verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren.

Vorzugsweise beträgt der Anteil an Carbonatgruppen bis zu 100 Mol-%, insbesondere bis zu 80 Mol-%, besonders bevorzugt bis zu 50 Mol-%, bezogen auf die Summe an Estergruppen und Carbonatgruppen.

Sowohl die Ester- als auch der Carbonatanteil der aromatischen Polyestercarbonate kann in Form von Blöcken oder statistisch verteilt im Polykondensat vorliegen.

Die relative Lösungsviskosität (ηᵣₑ₁) der aromatischen Polyestercarbonate liegt im Bereich 1,18 bis 1,4, vorzugsweise 1,22 bis 1,3 (gemessen an Lösungen von 0,5 g Polyestercarbonat in 100 ml Methylenchlorid-Lösung bei 25°C).

Die thermoplastischen, aromatischen Polycarbonate und Polyestercarbonate können allein oder im beliebigen Gemisch untereinander eingesetzt werden.

### Komponente B

Die erfindungsgemäße Komponente B stellt Pfropfpolymerisate dar. Diese umfassen Pfropfcopolymerisate mit kautschukelastischen Eigenschaften, die aus mindestens 2 der folgenden Monomeren erhältlich sind: Chloropren, Butadien-1,3, Isopren, Styrol, Acrylnitril, Ethylen, Propylen, Vinylacetat und (Meth)-Acrylsäureester mit 1 bis 18 C-Atomen in der Alkoholkomponente; also Polymerisate, wie sie z.B. in Methoden der Organischen Chemie" (Houben-Weyl), Bd. 14/1, Georg Thieme-Verlag, Stuttgart 1961, S. 393-406 und in C.B. Bucknall, "Thoughened Plastics", Appl. Science Publishers, London 1977, beschrieben sind. Bevorzugte Polymerisate B sind partiell vernetzt und besitzen Gelgehalte von über 20 Gew.-%, vorzugsweise über 40 Gew.-%, insbesondere über 60 Gew.-%.

Bevorzugte Pfropfpolymerisate B umfassen Pfropfpolymerisate aus:
B.1 5 bis 95, vorzugsweise 30 bis 80 Gew.-%, einer Mischung aus
   B.1.1 50 bis 99 Gew.-% Styrol, α-Methylstyrol, halogen- oder methylkernsubstituierten Styrolen, Methylmethacrylat oder Mischungen dieser Verbindungen und
   B.1.2 1 bis 50 Gew.-% Acrylnitril, Methacrylnitril, Methylmethacrylat, Maleinsäureanhydrid, C₁-C₄-alkyl-bzw. phenyl-N-substituierten Maleinimiden oder Mischungen dieser Verbindungen auf
B.2 5 bis 95, vorzugsweise 20 bis 70 Gew.-% Polymerisat auf Dien- und/oder Alkylacrylat-Basis mit einer Glasübergangstemperatur unter -10°C.

Bevorzugte Pfropfpolymerisate B sind z.B. mit Styrol und/oder Acrylnitril und/oder (Meth)-Acrylsäurealkylestern gepfropfte Grundlagen B.2 wie Polybutadiene, Polyisoprene, Butadien/Styrol- oder Butadien/Arylnitril-Copolymerisate und Acrylatkautschuke; d.h. Copolymerisate der in der DE-A 1 694 173 (=US-A 3 564 077) beschriebenen Art; mit Acryl- oder Methacrylsäurealkylestern, Vinylacetat, Acrylnitril, Styrol und/oder Alkylstyrolen gepfropfte Polybutadiene, Butadien/Styrol oder Butadien/Acrylnitril-Copolymerisate, Polyisobutene oder Polyisoprene, wie sie z.B. in der DE-A 2 348 377 (=US-A 3 919 353) beschrieben sind. Besonders bevorzugte Pfropfgrundlagen sind Polybutadiene, die bis zu 50, vorzugsweise bis zu 30 Gew.-% andere Monomere ausgewählt aus der Gruppe Styrol, Acrylnitril oder Acryl- oder Methacrylsäure-C₁-C₄-alkylester oder Mischungen hieraus enthalten können.

Besonders bevorzugte Polymerisate B sind z.B. ABS-Polymerisate, wie sie z.B. in der DE-A 2 035 390 (=US-A 3 644 574) oder in der DE-A 2 248 242 (=GB-A 1 409 275) beschrieben sind.

Weitere besonders bevorzugte Pfropfpolymerisate B sind erhältlich durch Pfropfreaktion von
α 10 bis 70, vorzugsweise 15 bis 50, insbesondere 20 bis 40 Gew.-%, bezogen auf Pfropfpolymisat B, mindestens eines (Meth)-Acrylsäureesters oder 10 bis 70, vorzugsweise 15 bis 50, insbesondere 20 bis 40 Gew.-% eines Gemisches aus 10 bis 50, vorzugsweise 20 bis 35 Gew.-%, bezogen auf Gemisch, Acrylnitril oder (Meth)-Acrylsäureester und 50 bis 90, vorzugsweise 65 bis 80 Gew.-%, bezogen auf Gemisch, Styrol, als Pfropfauflage B.1 auf
β 30 bis 90, vorzugsweise 50 bis 85, insbesondere 60 bis 80 Gew.-%, bezogen auf Pfropfpolymerisat B, eines Butadienpolymerisats mit mindestens 50 Gew.-%, bezogen auf β, Butadienresten als Pfropfgrundlage B.2.

Der Gelanteil der Pfropfgrundlage β beträgt im allgemeinen mindestens 20 Gew.-%, vorzugsweise 40 Gew.-% (in Toluol gemessen), der Pfropfgrad G 0,15 bis 0,55 und der mittlere Teilchendurchmesser d₅₀ des Pfropfpolymerisats B.2 0,05 bis 2 µm, vorzugsweise 0,1 bis 0,6 µm.

(Meth)-Acrylsäureester α sind Ester der Acrylsäure oder Methacrylsäure mit einwertigen Alkoholen mit 1 bis 18 C-Atomen. Besonders bevorzugt sind Methacrylsäuremethylester, -ethylester und -propylester, n-Butylacrylat, t-Butylacrylat und t-Butylmethacrylat.

Die Pfropfgrundlage β kann neben Butadienresten bis zu 50 Gew.-%, bezogen auf β, Reste anderer ethylenisch ungesättigter Monomeren, wie Styrol, Acrylnitril, Ester der Acryl- oder Methacrylsäure mit 1 bis 4 C-Atomen in der Alkoholkomponente (wie Methylacrylat, Ethylacrylat, Methylmethacrylat, Ethylmethacrylat), Vinylester und/oder Vinylether enthalten. Die bevorzugte Pfropfgrundlage β besteht aus reinem Polybutadien.

Der Pfropfgrad G bezeichnet das Gewichtsverhältnis von aufgepfropften Pfropfmonomeren zur Pfropfgrundlage und ist dimensionslos.

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-796) bestimmt werden.

Besonders bevorzugte Polymerisate B sind z.B. auch Pfropfpolymerisate aus
τ. 20 bis 90 Gew.-%, bezogen auf Komponente B, Acrylatkautschuk mit einer Glasübergangstemperatur <-20°C als Pfropfgrundlage B.2 und
δ. 10 bis 80 Gew.-%, bezogen auf Komponente B, mindestens eines polymerisierbaren, ethylenisch ungesättigten Monomeren als Pfropfmonomere B.1.

Die Acrylatkautschuke τ der Polymerisate B sind vorzugsweise Polymerisate aus Acrylsäurealkylestern, gegebenenfalls mit bis zu 40 Gew.-%, bezogen auf τ, anderen polymerisierbaren, ethylenisch ungesättigten Monomeren. Zu den bevorzugten polymerisierbaren Acrylsäureestern gehören C₁-C₈-Alkylester, beispielsweise Methyl-, Ethyl-, Butyl-, n-Octyl- und 2-Ethyl-hexylester; Halogenalkylester, vorzugsweise Halogen-C₁-C₈-alkylester, wie Chlorethylacrylat, sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugt vernetzende Monomere sind Allylmethacrylat, Ethylenglykoldimethylacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Trivinylcyanurat, Triacryloylhexahydro-s-triazin, Triallylbenzole.

Die Menge der vernetzenden Monomere beträgt vorzugsweise 0,02 bis 5, insbesondere 0,05 bis 2 Gew.-%, bezogen auf die Pfropfgrundlage τ.

Bei cyclischen vernetzenden Monomeren mit mindestens 3 ethylenisch ungesättigten Gruppen ist es vorteilhaft, die Menge auf unter 1 Gew.-% der Pfropfgrundlage τ zu beschränken.

Bevorzugt "andere" polymerisierbare, ethylenisch ungesättigte Monomere, die neben den Acrylsäureestern gegebenenfalls zur Herstellung der Pfropfgrundlage τ dienen können, sind z.B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage τ sind Emulsionspolymerisate, die einen Gelgehalt von mindestens 60 Gew.-% aufweisen.

Weitere geeignete Pfropfgrundlagen gemäß B.2 sind Silikonkautschuke mit pfropfaktiven Stellen, wie sie in DE-A 3 704 657, DE-A 3 704 655, DE-A 3 631 540 und DE-A 3 631 539 beschrieben werden.

Der Gelgehalt der Pfropfgrundlage B.2 wird bei 25°C in Dimethylformamid bestimmt (M. Hoffmann, H. Krömer, R. Kuhn, Polymeranalytik I und II, Georg Thieme-Verlag, Stuttgart 1977).

Die Pfropfpolymerisate B können nach bekannten Verfahren wie Masse-, Suspensions-, Emulsions- oder Masse-Suspensionsverfahren hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B solche Produkte verstanden, die durch Polyreaktion der Pfropfmonomere auf die Pfropfgrundlage gewonnen werden.

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

### Komponente C

Die Komponente C umfasst ein oder mehrere thermoplastische Vinyl (co)polymerisate C.1 und/oder Polyalkylenterephthalate C.2.

Geeignet sind als Vinyl(co)Polymerisate C.1 Polymerisate von mindestens einem Monomeren aus der Gruppe der Vinylaromaten, Vinylcyanide (ungesättigte Nitrile), (Meth)Acrylsäure-(C₁-C₈)-Alkylester, ungesättigte Carbonsäuren sowie Derivate (wie Anhydride und Imide) ungesättigter Carbonsäuren. Insbesondere geeignet sind (Co)Polymerisate aus
C.1.1 50 bis 99, vorzugsweise 60 bis 80 Gew.-% Vinylaromaten und/oder kernsubstituierten Vinylaromaten wie beispielsweise Styrol, α-Methylstyrol, p-Methylstyrol, p-Chlorstyrol) und/oder Methacrylsäure-(C₁-C₈)-Alkylester wie z.B. Methylmethacrylat, Ethylmethacrylat), und
C.1.2 1 bis 50, vorzugsweise 20 bis 40 Gew.-% Vinylcyanide (ungesättigte Nitrile) wie Acrylnitril und Methacrylnitril und/oder (Meth)Acrylsäure-(C₁-C₈)-Alkylester (wie z.B. Methylmethacrylat, n-Butylacrylat, t-Butylacrylat) und/oder ungesättigte Carbonsäuren (wie Maleinsäure) und/oder Derivate (wie Anhydride und Imide) ungesättigter Carbonsäuren (beispielsweise Maleinsäureanhydrid und N-Phenyl-Maleinimid).

Die (Co)Polymerisate C.1 sind harzartig, thermoplastisch und kautschukfrei.

Besonders bevorzugt ist das Copolymerisat aus C.1.1 Styrol und C.1.2 Acrylnitril.

Die (Co)Polymerisate gemäß C.1 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise Molekulargewichte M̅_{w} (Gewichtsmittel, ermittelt durch Lichtstreuung oder Sedimentation) zwischen 15 000 und 200 000.

Die Polyalkylenterephthalate der Komponente C.2 sind Reaktionsprodukte aus aromatischen Dicarbonsäuren oder ihren reaktionsfähigen Derivaten, wie Dimethylestem oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Mol-%, vorzugsweise mindestens 90 Mol-%, bezogen auf die Dicarbonsäurekomponente Terephthalsäurereste und mindestens 80 Mol-%, vorzugsweise mindestens 90 Mol-%, bezogen auf die Diolkomponente Ethylenglykol- und/oder Butandiol-1,4-Reste.

Die bevorzugten Polyalkylenterephthalate können neben Terephthalsäureresten bis zu 20 Mol-%, vorzugsweise bis zu 10 Mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexan-diessigsäure.

Die bevorzugten Polyalkylenterephthalate können neben Ethylenglykol- bzw. Butandiol-1,4-Resten bis zu 20 Mol-%, vorzugsweise bis zu 10 Mol-%, andere aliphatische Diole mit 3 bis 12 C-Atomen oder cycloalipahtische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-β-hydroxyethoxy-phenyl)-propan und 2,2-Bis-(4-hydroxypropoxyphenyl)-propan (DE-OS 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-OS 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen im allgemeinen eine Grenzviskosität von 0,4 bis 1,5 dl/g, vorzugsweise 0,5 bis 1,2 dl/g, gemessen in Phenol/o-Dichlorbenzol (1:1 Gewichtsteile) bei 25°C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

### Komponente D

Die erfindungsgemäßen Formmassen enthalten als Flammschutzmittel wenigstens eine Phosphorverbindung der Formel (I-a) 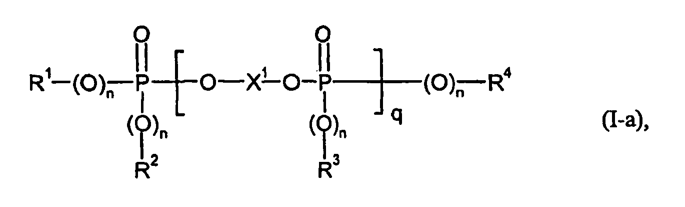 wobei die Reste X¹, R¹, R², R³ und R⁴, n und q die oben angegebene Bedeutung haben,
und wenigstens eine Phosphorverbindung der Formel (I-b) 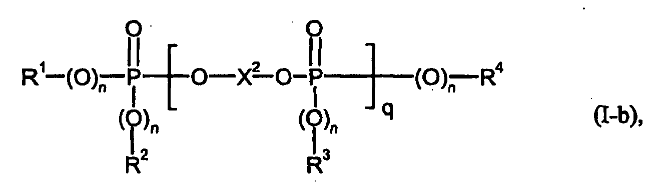 wobei die Reste X², R¹, R², R³ und R⁴, n und q die oben angegebene Bedeutung haben,
mit der Maßgabe, dass mindestens einer der Reste X¹, X², R¹, R², R³ und R⁴ in Formel (Ia) und (Ib) verschieden sind.

Die aromatischen Gruppen in der Definition von R¹, R², R³ und R⁴ können ihrerseits unabhängig voneinander mit Halogen- und/oder Alkylgruppen, vorzugsweise Chlor, Brom und/oder C₁-C₄-Alkyl substituiert sein. Besonders bevorzugte ArylReste sind Kresyl, Phenyl, Xylenyl, Propylphenyl oder Butylphenyl sowie die entsprechenden bromierten und chlorierten Derivate davon.

q steht für Werte von 0,5 bis 30, vorzugsweise für einen durchschnittlichen Wert von 1 bis 30, besonders bevorzugt 1 bis 20, insbesondere 1 bis 10. Bei Gemischen von Phosphorverbindungen kann q die obengenannten durchschnittlichen Werte annehmen. In diesem Gemisch können Monophosphorverbindungen und/oder oligomere und/oder polymere Phosphorverbindungen enthalten sein. Im Falle von q = 0 beschreibt die Formel (I) Monophosphorverbindungen.

X¹ und X² sind jeweils bevorzugt verschieden und leiten sich von Diphenolen gemäß Formel (II) ab.

Bevorzugte Diphenole sind Hydrochinon, Resorcin, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α- Bis-(hydroxyphenyl)-düsopropyl-benzole

Besonders bevorzugte Diphenole sind Bisphenol-A, 2,4- Bis-(4-hydroxyphenyl)-2-methylbutan, 1,1- Bis-(4-hydroxyphenyl)-cyclohexan, 1,1-Bis-(4-hydroxyphenyl)-3,3,5-trimethylcyclohexan, 4,4' -Dihydroxydiphenylsulfid und 4,4'-Dihydroxydiphenylsulfon.

Besonders bevorzugte Diphenole sind Bisphenol A, Resorcin, Hydrochinon und Dihydroxydiphenylsulfon.

Mischungen aus Phosphorverbindungen der Formeln (I-a) bzw (I-b), vorzugsweise mono- und/oder oligomeren Phosphaten der Formel (I-a) bzw (I-b), mit durchschnittlichen q-Werten von 1 bis 20, insbesondere 1 bis 10 werden als Komponente D besonders bevorzugt eingesetzt.

Als Monophosphorverbindungen, d.h. q = 0 kommen Verbindungen in Frage wie Tributylphosphat, Tns-(2-chlorethyl)-phosphat, Tris-(2,3-dibrompropyl)-phosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, halogensubstituierte Arylphosphate, Methylphosphonsäuredimethylester, Methylphosphonsäurediphenylester, Phenylphosphonsäurediethylester, Triphenylphosphinoxid oder Trikresylphosphinoxid.

Vorzugsweise enthalten die erfindungsgemäßen Formmassen als Flammschutzmittel mindestens eine Phosphorverbindung gemäß Formel (I-c), 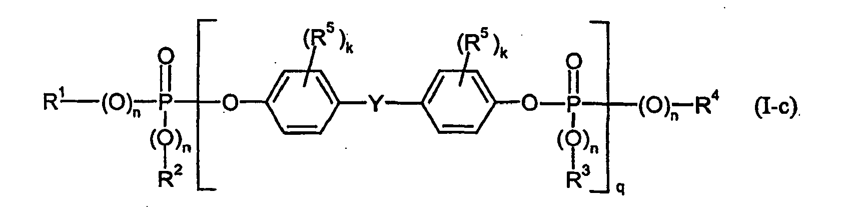 in denen R¹, R², R³, R⁴, n und q die o.g. Bedeutungen haben. R⁵ steht unabhängig für C₁-C₄-Alkyl, k steht für 0, 1 oder 2, bevorzugt für 0, Y für Methylen oder Isopropyliden. Besonders bevorzugt stellt Y einen Isopropyliden-Rest dar.

Die Phosphorverbindungen gemäß Komponente D sind allgemein bekannte Verbindungen der organischen Chemie bzw. lassen sich nach bekannten Methoden in analoger Weise herstellen (vgl. z.B. Ullmanns Encyklopädie der Technischen Chemie, Bd. 18, S. 301 ff. 179; Houben-Weyl, Methoden der Organischen chemie, Bd. 12/1, S. 43; Beistein, Bd. 6, S. 177), indem zum Aufbau wenigstens 2 verschiedene Dihydroxyverbindungen, z.B. Bisphenole, Hydrochinon, eingesetzt werden.

### Komponente E

Die fluorierten Polyolefine E sind hochmolekular und besitzen Glasübergangstemperaturen von über -30°C, in der Regel von über 100°C, Fluorgehalte, vorzugsweise von 65 bis 76, insbesondere von 70 bis 76 Gew.-%, mittlere Teilchendurchmesser d₅₀ von 0,05 bis 1 000, vorzugsweise 0,08 bis 20 µm. Im allgemeinen haben die fluorierten Polyolefine E eine Dichte von 1,2 bis 2,3 g/cm³. Bevorzugte fluorierte Polyolefine E sind Polytetrafluorethylen, Polyvinylidenfluorid, Tetrafluorethylen (Hexafluorpropylen- und Ethylen/Tetrafluorethylen-Copolymerisate. Die fluorierten Polyolefine sind bekannt (vgl. "Vinyl and Related Polymers" von Schildknecht, John Wiley & Sons, Inc., New York, 1962, Seite 484-494; "Fluorpolymers" von Wall, Wiley-Interscience, John Wiley & Sons, Inc., New York, Band 13, 1970, Seite 623-654; "Modern Plastics Encyclopedia", 1970-1971, Band 47, Nr. 10 A, Oktober 1970, Mc Graw-Hill, Inc., New York, Seite 134 und 774; "Modern Plastica Encyclopedia", 1975-1976, Oktober 1975, Band 52, Nr. 10 A, Mc Graw-Hill, Inc., New York, Seite 27, 28 und 472 und US-PS 3 671 487, 3 723 373 und 3 838 092).

Sie können nach bekannten Verfahren hergestellt werden, so beispielsweise durch Polymerisation von Tetrafluorethylen in wässrigem Medium mit einem freie Radikale bildenden Katalysator, beispielseise Natrium-, Kalium- oder Ammoniumperoxidisulfat bei Drücken von 7 bis 71 kg/cm² und bei Temperaturen von 0 bis 200°C, vorzugsweise bei Temperaturen von 20 bis 100°C. (Nähere Einzelheiten s. z. B. US-Patent 2 393 967). Je nach Einsatzform kann die Dichte dieser Materialien zwischen 1,2 und 2,3 g/cm³, die mittlere Teilchengröße zwischen 0,5 und 1 000 µm liegen.

Erfindungsgemäß bevorzugte fluorierte Polyolefine E sind Tetrafluorethylenpolymerisate mit mittleren Teilchendurchmesser von 0,05 bis 20 µm, vorzugsweise 0,08 bis 10 µm, und eine Dichte von 1,2 bis 1,9 g/cm³ und werden vorzugsweise in Form einer koagulierten Mischung von Emulsionen der Tetrafluorethylenpolymerisate E mit Emulsionen der Pfropfpolymerisate B eingesetzt.

Geeignete, in Pulverform einsetzbare fluorierte Polyolefine E sind Tetrafluorethylenpolymerisate mit mittleren Teilchendurchmesser von 100 bis 1 000 µm und Dichten von 2,0 g/cm³ bis 2,3 g/cm³.

Zur Herstellung einer koagulierten Mischung aus B und E wird zuerst eine wässrige Emulsion (Latex) eines Pfropfpolymerisates B mit einer feinteiligen Emulsion eines fluorierten Polyolefins E vermischt; geeignete Emulsionen von fluorierten Polyolefinen besitzen üblicherweise Feststoffgehalte von 30 bis 70 Gew-.%, insbesondere von 50 bis 60 Gew.%, vorzugsweise von 30 bis 35 Gew.-%.

Die Mengenangabe bei der Beschreibung der Komponente B schließt den Anteil des Pfropfpolymerisats für die koagulierte Mischung aus Pfropfpolymerisat und fluoriertem Polyolefinen nicht ein.

In der Emulsionsmischung liegt das Gleichgewichtsverhältnis Pfropfpolymerisat B zum fluorierten Polyolefin E bei 95:5 bis 60:40. Die Emulsionsmischung wird in bekannter Weise koaguliert, beispielsweise durch Sprühtrocknen, Gefriertrocknung oder Koagulation mittels Zusatz von anorganischen oder organischen Salzen, Säuren, Basen oder organischen, mit Wasser mischbaren Lösemitteln, wie Alkoholen, Ketonen, vorzugsweise bei Temperaturen von 20 bis 150°C, insbesondere von 50 bis 100°C. Falls erforderlich, kann bei 50 bis 200°C, bevorzugt 70 bis 100°C, getrocknet werden.

Geeignete Tetrafluorethylenpolymerisat-Emulsionen sind handelsübliche Produkte und werden beispielsweise von der Firma DuPont als Teflon, wie beispielsweise Teflon 30 N angeboten.

Die erfindungsgemäßen Zusammensetzungen können wenigstens eines der üblichen Additive, wie Gleit- und Entformungsmittel, Nukleiermittel, Antistatika, Stabilisatoren sowie Farbstoffe, Pigmente und/oder Verstärkungsmaterialien enthalten. Als anorganische Verstärkungsmaterialien kommen Glasfasern, ggf. geschnitten oder gemahlen, Glasperlen, Glaskugeln, blättchenförmiges Verstärkungsmaterial, wie Kaolin, Talk, Glimmer, Mika, Kohlefasern in Frage. Vorzugsweise werden als Verstärkungsmaterial geschnittene oder gemahlene Glasfasern, vorzugsweise mit einer Länge von 1 bis 10 mm und einem Durchmesser von <20µm in einer Menge von 1 bis 40 Gew.-Teilen eingesetzt; vorzugsweise sind die Glasfasern oberflächenbehandelt.

Die erfindungsgemäßen Zusammensetzungen können darüber hinaus wenigstens eine polare Verbindung wenigstens eines der Metalle der 1. bis 5. Hauptgruppe oder der 1. bis 8. Nebengruppe des Periodensystems mit mindestens einem Element ausgewählt aus der Gruppe von Sauerstoff, Schwefel, Bor, Kohlenstoff, Phosphor, Stickstoff, Wasserstoff und Silizium als feinstverteiltes anorganisches Pulver enthalten. Vorzugsweise werden als polare Verbindung ein Oxid oder Hydroxid, vorzugsweise TiO₂, SiO₂, SnO₂, ZnO, Böhmit, ZrO₂, Al₂O₃, Eisenoxide, deren Mischungen und dotierte Verbindungen, besonders bevorzugt Böhmit oder TiO₂.

Die erfindungsgemäßen Zusammensetzungen können ein oder mehrere weitere, gegebenenfalls synergistisch wirkenden Flammschutzmittel enthalten. Beispielhaft werden als weitere Flammschutzmittel von Komponente D verschiedene Phosphorverbindungen, organische Halogenverbindungen wie Decabrombisphenylether, Tetrabrombisphenol, anorganische Halogenverbindungen wie Ammoniumbromid, Stickstoffverbindungen, wie Melamin, Melaminformaldehyd-Harze, anorganische Hydroxidverbindungen wie Mg-, Al-Hydroxid, anorganische Verbindungen, wie Antimonoxide, Bariummetaborat, Hydroxoantimonat, Zirkonoxid, Zirkonhydroxid, Molybdenoxid, Ammoniummolybdat, Zinkborat, Ammoniumborat und Zinnoxid sowie Siloxanverbindungen genannt. Diese Flammschutzmittel werden im allgemeinen in einer Menge bis zu 20 Gew.-% (bezogen auf die Gesamt-Formmasse) zugesetzt.

Die erfindungsgemäßen Zusammensetzungen enthaltend die Komponenten A bis E und gegebenenfalls weitere bekannte Zusätzen wie Stabilisatoren, Farbstoffe, Pigmente, Gleit- und Entformungsmittel, Nukleiermittel, Nanopartikel sowie Antistatika und Verstärkungsmaterialien und Flammschutzmittel, werden hergestellt, indem man die jeweiligen Bestandteile in bekannter Weise vermischt und bei Temperaturen von 200°C bis 300°C in üblichen Aggregaten wie Innenknetern, Extrudern und Doppelwellenschnecken schmelzcompoundiert und schmelzextrudiert, wobei die Komponente E vorzugsweise in Form der bereits erwähnten koagulierten Mischung eingesetzt wird.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die Zusammensetzungen der vorliegenden Erfindung können zur Herstellung von Formkörpern jeder Art verwendet werden. Insbesondere können Formkörper durch Spritzguss hergestellt werden. Beispiele für herstellbare Formkörper sind: Gehäuseteile jeder Art, z. B. für Haushaltsgeräte wie Saftpressen, Kaffeemaschinen, Mixer, für Büromaschinen wie Monitore, Drucker, Kopierer oder Abdeckplatten für den Bausektor und Teile für den Kfz-Sektor. Sie werden außerdem auf dem Gebiet der Elektrotechnik eingesetzt, weil sie sehr gute elektrische Eigenschaften haben.

Weiterhin können die erfindungsgemäßen Zusammensetzungen beispielsweise zur Herstellung von folgenden Formkörpern bzw. Formteilen verwendet werden:

Innenausbauteile für Schienenfahrzeuge (FR), Radkappen, Gehäuse von Kleintransformatoren enthaltenden Elektrogeräten, Gehäuse für Geräte zur Informationsverbreitung und -Übermittlung, Gehäuse und Verkleidungen für medizinische Zwecke, Massagegeräte und Gehäuse dafür, Spielfahrzeuge für Kinder, flächige Wandelemente, Gehäuse für Sicherheitseinrichtungen, Heckspoiler, wärmeisolierte Transportbehältnisse, Vorrichtung zur Haltung oder Versorgung von Kleintieren, Formteile für Sanitär- und Badeausrüstungen, Abdeckgitter für Lüfteröffnungen, Formteile für Garten- und Gerätehäusen, Gehäuse für Gartengeräte.

Weitere Anwendungen sind möglich
als Dateitechnikgeräte: Telekommunikationsgeräte wie Telefongeräte und Telefaxe, Computer, Drucker, Scanner, Plotter, Monitor, Tastatur, Schreibmaschine, Diktiergeräte, usw.,
als Elektrogeräte: Netzteile, Ladegeräte, Kleintransformatoren für Computer und Unterhaltungselektronik, Niederspannungstransformatoren, usw.,
als Gartengeräte: Gartenmöbel, Rasenmähergehäuse, Rohre und Gehäuse für Gartenbewässerung, Gartenhäuser, Laubsauger, Schredder, Hächsler, Spritzgeräte usw.,
im Möbelbereich: Arbeitsplatten, Möbellaminate, Rolladenelemente, Büromöbel, Tische, Stühle, Sessel, Schränke, Regale, Türelemente, Fensterelemente, Bettkästen usw.,
als Sport-/Spielgeräte: Spielfahrzeuge, Sitzflächen, Pedale, Sportgeräte, Fahrräder, Tischtennisplatte, Heimtrainer, Golf-Caddys, Snow boards, Bootsaussenteile, Campingartikel, Strandkörbe usw.,
im Bausektor innen/außen: Hausverkleidung, Profilleiste, Rohre, Kabel, Rolladenelemente, Briefkästen, Lampengehäuse, Dachziegel, Fliesen, Trennwände, Kabelkanäle, Fußbodenleiste, Steckdosen usw.
im Bereich der Kfz/Schienenfahrzeuge: Wand-, Decken-Verkleidungen, Sitzschalen, Sitze, Bänke, Tische, Gepäckablagen, Radkappen, Heckspoiler, Kotflügel, Heckklappen, Motorhauben, Seitenteile usw.

Besonders geeignet sind die Zusammensetzungen zur Herstellung von Formteilen, wo besonders hohe Ansprüche an die Wärmeformbeständigkeit der eingesetzten Kunststoffe gestellt werden.

Eine weitere Form der Verarbeitung ist die Herstellung von Formkörpern durch Tiefziehen aus vorher hergestellten Platten oder Folien.

Ein weiterer Gegenstand der vorliegenden Erfindung ist daher auch die Verwendung der erfindungsgemäßen Zusammensetzungen zur Herstellung von Formkörpern jeglicher Art, vorzugsweise der oben genannten, sowie die Formkörper aus den erfindungsgemäßen Zusammensetzungen.

### Beispiele

### Komponente A.1

Lineares Polycarbonat auf Basis Bisphenol A mit einer relativen Lösungsviskosität von 1,272, gemessen in CH₂Cl₂ als Lösungsmittel bei 25°C und einer Konzentration von 0,5 g/100 ml.

### Komponente B.1

Pfropfpolymerisat von 40 Gew.-Teilen eines Copolymerisats aus Styrol und Acrylnitril im Verhältnis von 73:27 auf 60 Gew.-Teile teilchenförmigen vernetzten Polybutadienkautschuk (mittlerer Teilchendurchmesser d₅₀ = 0,34 µm), hergestellt durch Emulsionspolymerisation.

### Komponente B.2

Pfropfpolymerisat von 84 Gew.-Teilen eines Copolymerisats aus Styrol und Acrylnitril im Verhältnis von 73:27 auf 16 Gew.-Teile vernetzten Polybutadienkautschuk, hergestellt durch Massepolymerisation.

### Komponente D.1

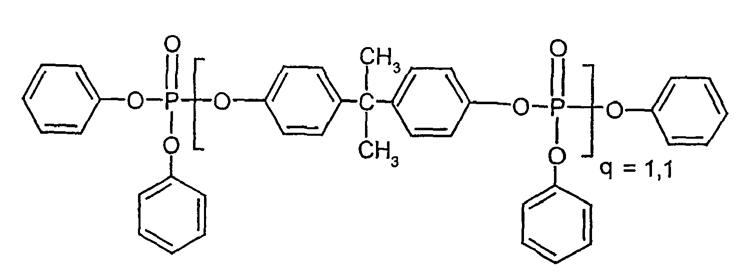

Reofos BAPP der Fa. Great Lakes Chem.

### Komponente D.2

m-Phenylen-bis(di-phenyl-phosphat), Fyrolflex^{®} RDP der Firma Akzo.

### Komponente E.1

Tetrafluorethylenpolymerisat als koagulierte Mischung aus einer SAN-Pfropfpolymerisat-Emulsion gemäß o.g. Komponente B in Wasser und einer Tetrafluorethylenpolymerisat-Emulsion in Wasser. Das Gewichtsverhältnis Pfropfpolymerisat B zum Tetrafluorethylenpolymerisat E in der Mischung ist 90 Gew.-% zu 10 Gew.-%. Die Tetrafluorethylenpolyermisat-Emulsion besitzt einen Feststoffgehalt von 60 Gew.-%, der mittlere Teilchendurchmesser liegt zwischen 0,05 und 0,5 µm. Die SAN-Pfropf polymerisat-Emulsion besitzt einen Feststoffgehalt von 34 Gew.-% und einen mittleren Latexteilchendurchmesser von d₅₀ = 0,28 µm.

Die Emulsion des Tetrafluorethylenpolymerisats (Teflon 30 N der Fa. DuPont) wird mit der Emulsion des SAN-Pfropfpolymerisats B vermischt und mit 1,8 Gew.-%, bezogen auf Polymerfeststoff, phenolischer Antioxidantien stabilisiert. Bei 85 bis 95°C wird die Mischung mit einer wässrigen Lösung von MgSO₄ (Bittersalz) und Essigsäure bei pH 4 bis 5 koaguliert, filtriert und bis zur praktischen Elektrolytfreiheit gewaschen, anschließend durch Zentrifugation von der Hauptmenge Wasser befreit und danach bei 100°C zu einem Pulver getrocknet. Dieses Pulver kann dann mit den weiteren Komponenten in den beschriebenen Aggregaten compoundiert werden.

### Herstellung und Prüfung der erfindungsgemäßen Formmassen

Das Mischen der Komponenten erfolgt auf einem 3-1-Innenkneter. Die Formkörper werden auf einer Spritzgießmaschine Typ Arburg 270 E bei 260°C hergestellt.

Die Bestimmung der Kerbschlagzähigkeit aₖ wird gemäß ISO 180/1 A durchgeführt.

Das Brandverhalten der Proben wurde nach UL-Subj. 94 V an Stäben der Abmessung 127 x 12,7 x 1,6 mm gemessen, hergestellt auf einer Spritzgussmaschine bei 260°C.

Der UL 94 V-Test wird wie folgt duchgeführt:

Substanzproben werden zu Stäben der Abmessungen 127 x 12,7 x 1,6 mm geformt. Die Stäbe werden vertikal so montiert, dass die Unterseite des Probekörpers sich 305 mm über einen Streifen Verbandstoff befindet. Jeder Probestab wird einzeln mittels zweier aufeinanderfolgender Zündvorgänge von 10 s Dauer entzündet, die Brenneigenschaften nach jedem Zündvorgang werden beobachtet und danach die Probe bewertet. Zum Entzünden der Probe wird ein Bunsenbrenner mit einer 100 mm (3,8 inch) hohen blauen Flamme von Erdgas mit einer Wärmeeinheit von 3,73 x 10⁴ kJ/m³ (1000 BTU per cubic foot) benutzt.

Die UL 94 V-O-Klassifizierung umfasst die nachstehend beschriebenen Eigenschaften von Materialien, die gemäß der UL 94 V-Vorschrift geprüft werden. Die Formmassen in dieser Klasse enthalten keine Proben, die länger als 10s nach jeder Einwirkung der Testflamme brennen; sie zeigen keine Gesamtflammzeit von mehr als 50 s bei der zweimaligen Flammeinwirkung auf jeden Probesatz; sie enthalten keine Proben, die vollständig bis hinauf zu der am oberen Ende der Probe befestigten Halteklammer abbrennen; sie weisen keine Proben auf, die die unterhalb der Probe angeordnete Watte durch brennende Tropfen oder Teilchen entzünden; sie enthalten auch keine Proben, die länger als 30 s nach Entfernen der Testflamme glimmen.

Andere UL 94-Klassifizierungen bezeichnen Proben, die weniger flammwidrig oder weniger selbstverlöschend sind, weil sie flammende Tropfen oder Teilchen abgeben. Diese Klassifizierungen werden mit UL 94 V-1 und V-2 bezeichnet. N.B. heißt "nicht bestanden" und ist die Klassifizierung von Proben, die eine Nachbrennzeit von ≥ 30 s aufweisen.

### Schmelzviskosität wird bestimmt nach DIN 54 811

MVR wird bestimmt nach ISO 1133

Eine Zusammenstellung der Eigenschaften der erfindungsgemäßen Formmasen ist in der nachfolgenden Tabelle 1 gegeben:

**Tabelle 1**

| Zusammensetzungen und Eigenschaften | | | | | | |
|---|---|---|---|---|---|---|
| (Mengenangabe in Gew.-%) | | | | | | |
| | | 1(Vgl.) | 2(Vgl.) | 3 | 4 | 5 |
| A1 | | 67,50 | 69,20 | 68,40 | 67,90 | 68,8 |
| B1 | | 13,10 | 13,50 | 13,30 | 13,25 | 13,40 |
| B2 | | 1,50 | 1,60 | 1,50 | 1,50 | 1,55 |
| D1 | | 13,00 | - | 5,95 | 9,75 | 3,25 |
| D2 | | - | 10,80 | 5,95 | 2,70 | 8,10 |
| E1 | | 4,50 | 4,50 | 4,50 | 4,50 | 4,50 |
| Entformungsmittel | | 0,40 | 0,40 | 0,40 | 0,40 | 0,40 |
| Phosphor-Gehalt | | 1,16 | 1,16 | 1,16 | 1,16 | 1,16 |
| aₖ [kJ/m²] | | 45 | 45 | 45 | 45 | 45 |
| ISO 180 1A | | | | | | |
| Vicat B 120 [°C] | | 98 | 97 | 99 | 99 | 98 |

| Gesamtnachbrennzeit [sec.] | | | | | | |
|---|---|---|---|---|---|---|
| (UL 94 V) | | | | | | |
| | 3,2 mm | 19 | 12 | 8 | 9 | 7 |
| | 1,6 mm | 68 | 49 | 24 | 29 | 24 |

| Schmelzviskositätsfakten | | | | | | |
|---|---|---|---|---|---|---|
| bei 260°C, 1000 s⁻¹ [Pas] | | 166 | 161 | 150 | 158 | 148 |
| MVR (240/5) [cm³/10 min] | | 22,6 | 23,2 | 24,7 | 24,1 | 26,4 |

Die erfindungsgemäßen Formmassen enthalten eine Mischung aus zwei strukturell unterschiedlichen Oligophosphaten und zeichnen sich durch eine günstige Eigenchaftskombination aus hoher Kerbschlagzähigkeit, hoher Wärmeformbeständigkeit, gutem Verarbeitungsverhalten und verbesserter Flammwidrigkeit aus.

## Patentansprüche

1. Zusammensetzungen enthaltend
I. mindestens 2 Komponenten ausgewählt aus der Gruppe der aromatischen Poly-(ester)carbonate, Pfropfpolymerisate von einem oder mehreren Vinylmonomeren auf eine oder mehrere Pfropfgrundlagen mit einer Glasübergangstemperatur <10°C, thermoplastischem Vinyl(co)polymerisat oder Polyalkylenterephthalat sowie
II. 0,5 bis 25 Gew.-Teile einer Mischung von Phosphorverbindungen enthaltend wenigstens eine Phosphorverbindung der Formel (I-a) 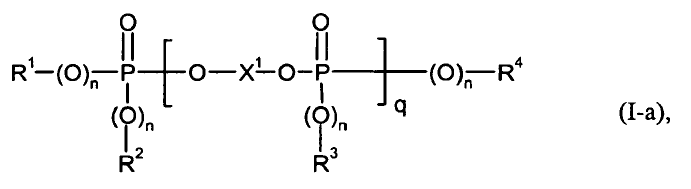 und wenigstens eine Phosphorverbindung der Formel (I-b) 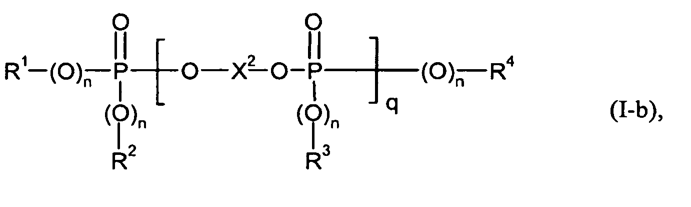
wobei X¹ und X² sich von Diphenolen der Formel (II) ableiten: 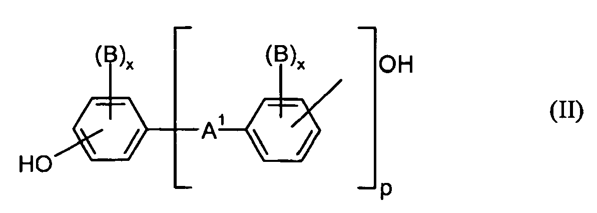 wobei
A¹ C₁-C₅-Alkylen, C₂-C₅-Alkyliden, C₅-C₆-Cycloalkyliden, -O-, -SO-,-CO-, -S-, -SO₂-, C₆-C₁₂-Arylen, welches mit weiteren gegebenenfalls Heteroatome enthaltenden aromatischen Ringen kondensiert sein kann, oder ein Rest der Formel 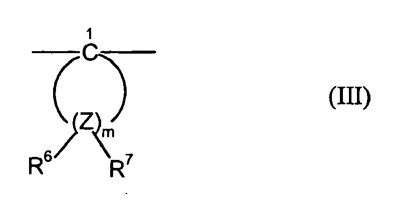 oder ein Rest der Formel (IV) 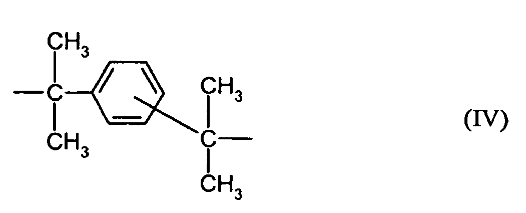 wobei
B unabhängig voneinander C₁-C₈-Alkyl, C₆-C₁₀-Aryl, C₇-C₁₂-Aralkyl,
x jeweils unabhängig voneinander 0,1 oder 2,
p 1 oder 0 sind, und
R⁶ und R⁷ für jedes Z individuell wählbar, unabhängig voneinander, Wasserstoff oder C₁-C₆-Alkyl
Z Kohlenstoff und
m eine ganze Zahl von 4 bis 7 bedeuten,
mit der Maßgabe, dass an mindestens einem Atom Z
R⁶ und R⁷ gleichzeitig Alkyl sind,
R¹, R², R³ und R⁴ unabhängig voneinander, gegebenenfalls halogeniertes C₁-C₈-Alkyl, jeweils gegebenenfalls durch Halogen und/oder C₁-C₄-Alkyl substituiertes C₅-C₆-Cycloalkyl, C₆-C₂₀-Aryl oder C₇-C₁₂-Aralkyl,
n unabhängig voneinander 0 oder 1
q 0,5 bis 30 bedeuten,
mit der Maßgabe, dass X¹ oder X² oder ein oder mehrere R¹, R², R³ und R⁴ jeweils verschieden sind und wobei die Summe der Gewichtsteile aller Komponenten 100 beträgt.

2. Zusammensetzungen gemäß Anspruch 1, wobei n = 1 ist.

3. Zusammensetzungen gemäß der Anspruch 1 oder 2, worin X¹ und X² sich ableiten von Bisphenol A, Resorcin, Hydrochinon oder Dihydrodiphenylsulfon.

4. Zusammensetzungen gemäß der Anspruch 1 oder 2, enthaltend mindestens eine Phosphorverbindung gemäß Formel (I-c), 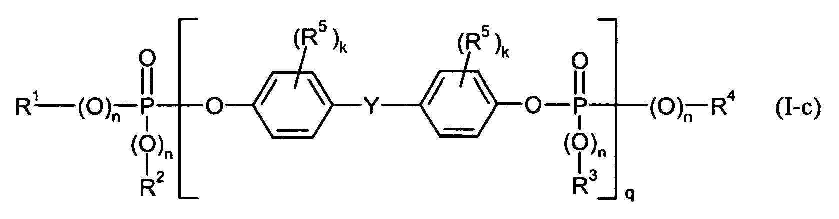 in der R¹, R², R³, R⁴, n und q die in Anspruch 1 angegebenen Bedeutungen haben, Y einen Isopropyliden-Rest, R⁵ unabhängig C₁-C₄-Alkyl und/oder Halogen, k 0, 1 oder 2 bedeuten.

5. Zusammensetzungen gemäß der Ansprüche 1 bis 4 enthaltend Pfropfcopolymerisate basierend auf mindestens 2 Monomeren ausgewählt aus der Gruppe von Chloropren, Butadien-1,3, Isopren, Styrol, Acrylnitril, Ethylen, Propylen, Vinylacetat und (Meth)-Acrylsäureester mit 1 bis 18 C-Atomen in der Alkoholkomponente.

6. Zusammensetzungen gemäß der Ansprüche 1 bis 4 enthaltend Pfropfpolymerisate basierend auf
B.1 5 bis 95, vorzugsweise 30 bis 80 Gew.-%, einer Mischung aus
B.1.1 50 bis 99 Gew.-% Styrol, α-Methylstyrol, halogen- oder methylkernsubstituierten Styrolen, Methylmethacrylat oder Mischungen dieser Verbindungen und
B.1.2 1 bis 50 Gew.-% Acrylnitril, Methacrylnitril, Methylmethacrylat, Maleinsäureanhydrid, C₁-C₄-alkyl-bzw. N-Phenyl-substituierten Maleinimiden oder Mischungen dieser Verbindungen und
B.2 5 bis 95, vorzugsweise 20 bis 70 Gew.-% Polymerisat auf Dien- oder Alkylacrylat-Basis oder Mischungen hieraus mit einer Glasübergangstemperatur unter -10°C.

7. Zusammensetzungen gemäß Anspruch 6, wobei B.2 ausgewählt ist aus Polybutadienen, Polyisoprenen oder Butadien/Styrol- oder Butadien/Acrylnitril-Copolymerisaten oder Acrylatkautschuken oder Mischungen hieraus.

8. Zusammensetzungen gemäß Ansprüche 1 bis 7 enthaltend als Vinyl(co)Polymerisate Polymerisate von mindestens einem Monomeren aus der Gruppe der Vinylaromaten, Vinylcyanide, (Meth)Acrylsäure-(C₁-C₈)-Alkylester, ungesättigten Carbonsäuren sowie Derivate ungesättigter Carbonsäuren.

9. Zusammensetzungen gemäß Ansprüche 1 bis 8 enthaltend Antidripping-Mittel.

10. Zusammensetzungen enthaltend
A) 5 bis 95 Gew.-Teile aromatisches Polycarbonat und/oder Polyestercarbonat
B) 1 bis 60 Gew.-Teile, wenigstens eines Pfropfpolymerisats von
B.1 5 bis 95 Gew.-% eines oder mehrerer Vinylmonomeren auf
B.2 5 bis 95 Gew.-% einer oder mehrerer Pfropfgrundlagen mit einer Glasumwandlungstemperatur < 10°C.
C) 0 bis 50 Gew.-Teile thermoplastisches Vinyl(co)polymerisat und/oder thermoplastisches Polyalkylenterephthalat
D) 0,5 bis 25 Gew.-Teile einer Mischung von Phosphorverbindungen gemäß Anspruch 1,
E) 0,05 bis 5 Gew.-Teile Antidripping Mittel,
mit der Maßgabe, dass X¹ oder X² oder ein oder mehrere R¹, R², R³ und R⁴ jeweils verschieden sind und wobei die Summe der Gewichtsteile aller Komponenten 100 beträgt.

11. Verwendung der Zusammensetzungen gemäß der Ansprüche 1 bis 10 zur Herstellung von Formteilen, Folien oder Platten.

12. Formteile, Folien oder Platten erhältlich aus Zusammensetzungen gemäß der Ansprüche 1 bis 10.

## Claims

1. Compositions containing
I. at least two components selected from the group comprising aromatic poly(ester) carbonates, graft polymers of one or more vinyl monomers on one or more graft bases having a glass transition temperature of < 10°C, a thermoplastic vinyl (co)polymer or poly(alkylene terephthalate), as well as
II. 0.5 to 25 parts by weight of a mixture of phosphorus compounds containing at least one phosphorus compound of the formula (I-a) 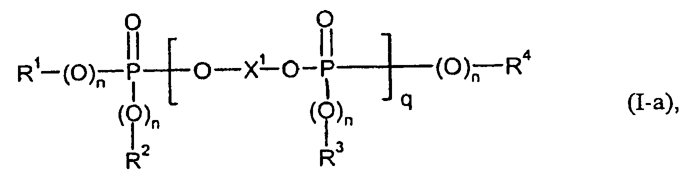 and at least one phosphorus compound of the formula (I-b) 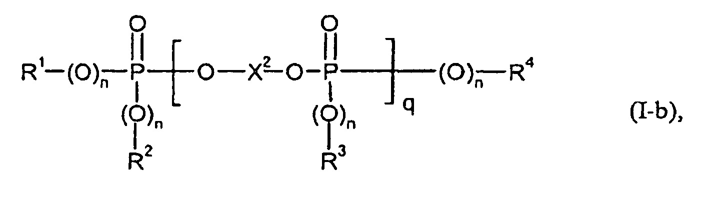
wherein X¹ and X² are derived from diphenols of the formula (II): 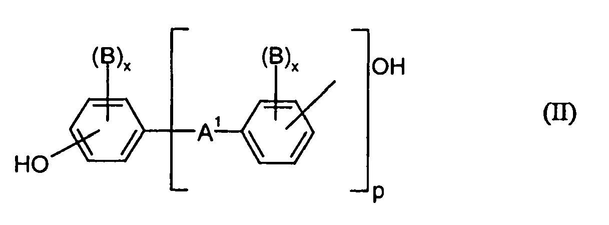 wherein
A¹ denotes C₁-C₅ alkylene, C₂-C₅ alkylidene, C₅-C₆ cycloalkylidene, -O-, -SO-, -CO-, -S-, -SO₂-, C₆-C₁₂ arylene, which may be condensed with further aromatic rings optionally containing heteroatoms, or a radical of the formula 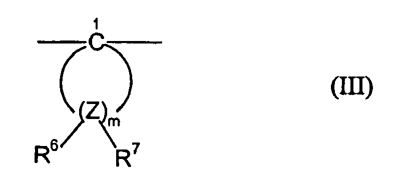 or a radical of the formula (IV) 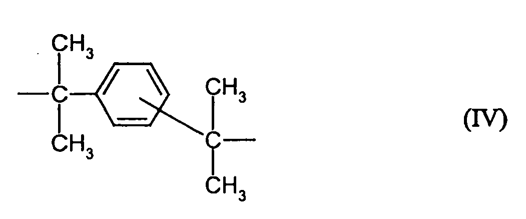 wherein
B independently of one another denotes C₁-C₈ alkyl, C₆-C₁₀ aryl, C₇-C₁₂- aralkyl,
x is in each case independently of one another 0, 1 or 2,
p is 1 or 0, and
R⁶ and R⁷ may be chosen individually for each Z, and independently of one another denote hydrogen or C₁-C₆ alkyl,
Z denotes carbon, and
m denotes an integer from 4 to 7,
with the proviso that on at least one atom Z
R⁶ and R⁷ are simultaneously alkyl,
R¹, R², R³ and R⁴ independently of one another denote optionally halogenated C₁-C₈-alkyl, or C₅-C₆-cycloalkyl, C₆-C₂₀-aryl or C₇-C₁₂-aralkyl in each case optionally substituted by halogen and/or C₁-C₄-alkyl,
n independently of one another denotes 0 or 1,
q denotes 0.5 to 30,
with the proviso that X¹ or X² or one or more of R¹, R², R³ and R⁴ are in each case different, and wherein the sum of the parts by weight of all components is 100.

2. Compositions according to claim 1, wherein n = 1.

3. Compositions according to claim 1 or 2, wherein X¹ and X² are derived from bisphenol A, resorcinol, hydroquinone or dihydroxydiphenyl sulfone.

4. Compositions according to claim 1 or 2, containing at least one phosphorus compound according to formula (I-c), 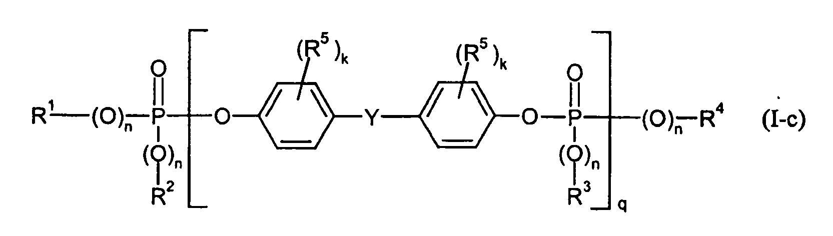 in which R¹, R², R³, R⁴, n and q have the meanings given in claim 1, Y denotes an isopropylidene radical, R⁵ independently denotes C₁-C₄ alkyl and/or halogen, and k denotes 0, 1 or 2.

5. Compositions according to claims 1 to 4, containing graft copolymers based on at least 2 monomers selected from the group comprising chloroprene, butadiene-1,3, isoprene, styrene, acrylonitrile, ethylene, propylene, vinyl acetate and (meth)acrylic acid esters with 1 to 18 C atoms in the alcohol component.

6. Compositions according to claims 1 to 4, containing graft polymers based on
B.1 5 to 95 wt.%, preferably 30 to 80 wt.%, of a mixture of
B.1.1 50 to 99 wt.% of styrene, α-methylstyrene, halogen-nuclear-substituted or methyl-nuclear-substituted styrenes, methyl methacrylate or mixtures of these compounds, and
B.1.2 1 to 50 wt.% of acrylonitrile, methacrylonitrile, methyl methacrylate, maleic anhydride, C₁-C₄ alkyl-substituted or N-phenyl-substituted maleimides or mixtures of these compounds, and
B.2 5 to 95 wt.%, preferably 20 to 70 wt.%, of a diene-based or alkyl acrylate-based polymer or mixtures thereof having a glass transition temperature below -10°C.

7. Compositions according to claim 6, wherein B.2 is selected from polybutadienes, polyisoprenes or butadiene/styrene copolymers or butadiene/acrylonitrile copolymers or acrylate rubbers or mixtures thereof.

8. Compositions according to claims 1 to 7 containing as vinyl (co)polymers, polymers of at least one monomer from the group comprising vinyl aromatic compounds, vinyl cyanides, (meth)acrylic acid-(C₁-C₈)-alkyl esters, unsaturated carboxylic acids, as well as derivatives of unsaturated carboxylic acids.

9. Compositions according to claims 1 to 8 containing anti-drip agents.

10. Compositions containing
A) 5 to 95 parts by weight of aromatic polycarbonate and/or polyester carbonate
B) 1 to 60 parts by weight of at least one graft polymer of
B.1 5 to 95 wt.% of one or more vinyl monomers on
B.2 5 to 95 wt.% of one or more graft bases having a glass transition temperature of < 10°C.
C) 0 to 50 parts by weight of thermoplastic vinyl (co)polymer and/or thermoplastic poly(alkylene terephthalate)
D) 0.5 to 25 parts by weight of a mixture of phosphorus compounds according to claim 1,
E) 0.05 to 5 parts by weight of anti-drip agent,
with the proviso that X¹ or X² or one or more radicals R¹, R², R³ and R⁴ is/are in each case different and wherein the sum of the parts by weight of all components is 100.

11. Use of the compositions according to claims 1 to 10 for the production of moulded parts, films or sheets.

12. Moulded parts, films or sheets obtainable from compositions according to claims 1 to 10.

## Revendications

1. Compositions contenant :
I. au moins 2 composants choisis parmi le groupe des poly(ester)carbonates aromatiques, des polymères greffés d'un ou de plusieurs monomères vinyliques sur une ou plusieurs bases de greffage avec une température de transition vitreuse < 10°C, des (co)polymères vinyliques ou des poly(téréphtalates d'alkylène), ainsi que
II. 0,5 à 25 parties en poids d'un mélange de composés du phosphore contenant au moins un composé du phosphore de la formule (I-a) : 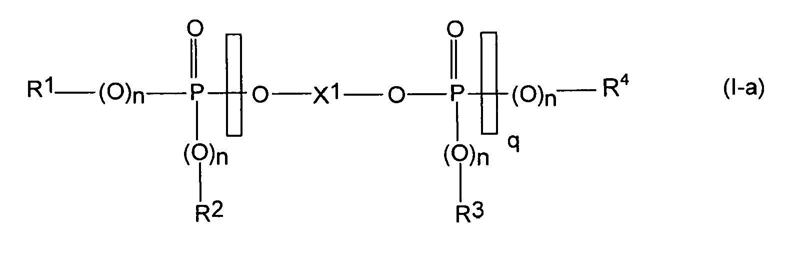 et au moins un composé du phosphore de la formule (I-b) : 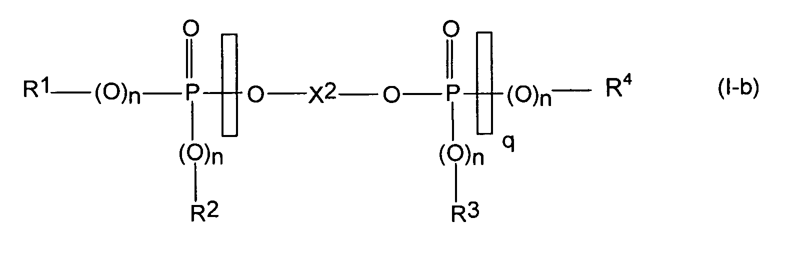
où X¹ et X² dérivent de phénols de la formule (II) : 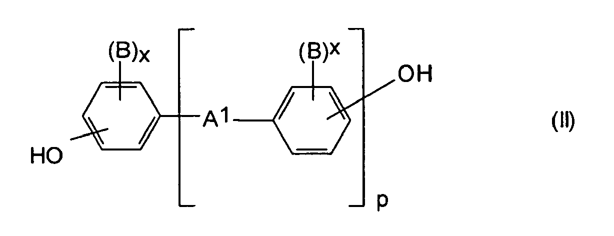 où
A¹ représente un radical alkylène en C₁-C₅, alkylidène en C₂-C₅, cycloalkylidène en C₅-C₆, -O-, -SO-, -CO-, -S-, -SO₂-, arylène en C₆-C₁₂, qui peut être condensé avec d'autres cycles aromatiques le cas échéant contenant des hétéroatomes, ou un reste de la formule 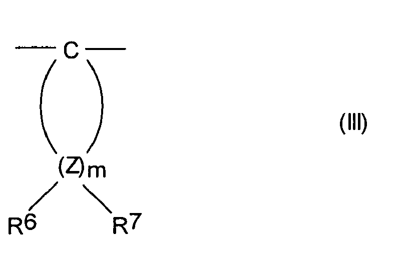 ou un reste de la formule (IV) : 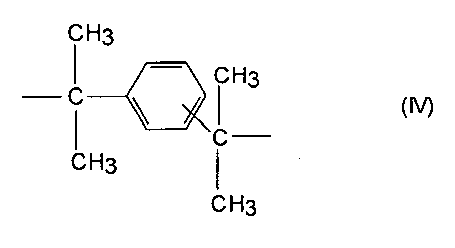 où
B représentent indépendamment l'un de l'autre, un radical alkyle en C₁-C₈, aryle en C₆-C₁₀, aralkyle en C₇-C₁₂,
x représentent chaque fois indépendamment l'un de l'autre, 0, 1 ou 2,
p est 1 ou 0, et
R⁶ et R⁷ peuvent être choisis individuellement, pour chaque Z, et sont indépendamment l'un de l'autre, un atome d'hydrogène ou un radical alkyle en C₁-C₆,
Z est un atome de carbone, et
m représente un nombre entier allant de 4 à 7,
avec la condition que sur au moins un atome Z,
R⁶ et R⁷ sont simultanément alkyle,
R¹, R², R³ et R⁴ représentent indépendamment l'un de l'autre, un radical alkyle en C₁-C₈ le cas échéant halogéné, un radical cycloalkyle en C₅-C₆ , un radical aryle en C₆-C₂₀ ou aralkyle en C₇-C₁₂, le cas échéant substitué par halogène et/ou alkyle en C₁-C₄,
n représentent indépendamment l'un de l'autre, 0 ou 1,
q représente 0,5 à 30,
avec la condition que X¹ ou X² ou un ou plusieurs R¹, R², R³ et R⁴ sont chaque fois différents, et
que la somme des parties en poids de tous les composants s'élève à 100.

2. Compositions selon la revendication 1, où n = 1.

3. Compositions selon la revendication 1 ou 2, où X¹ et X² dérivent du bisphénol A, du résorcinol, de l'hydroquinone ou de la dihydrodiphénylsulfone.

4. Compositions selon la revendication 1 ou 2, contenant au moins un composé du phosphore selon la formule (I-c) : 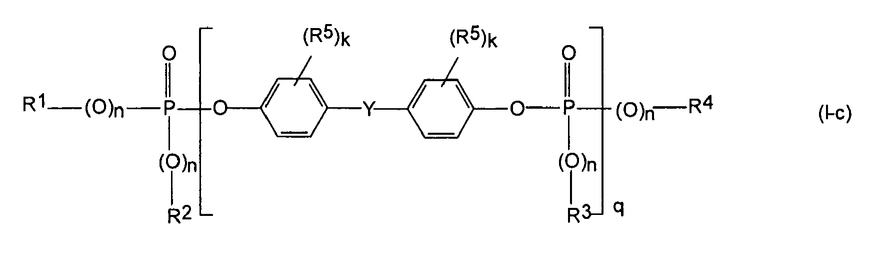 où R¹, R², R³, R⁴, n et q ont les significations données à la revendication 1, Y représente un reste isopropylidène, les R⁵ représentent indépendamment, un radical alkyle en C₁-C₄ et/ou un atome d'halogène, k représente 0, 1 ou 2.

5. Compositions selon les revendications 1 à 4, contenant des copolymères greffés à base d'au moins 2 monomères choisis dans le groupe du chloroprène, du butadiène-1,3, de l'isoprène, du styrène, de l'acrylonitrile, de l'éthylène, du propylène, de l'acétate de vinyle et d'ester d'acide (méth)acrylique ayant 1 à 18 atomes C dans le composant alcool.

6. Compositions selon les revendications 1 à 4, contenant des copolymères greffés à base de
B1 5 à 95, de préférence 30 à 80% en poids d'un mélange de
B.1.1 50 à 99% en poids de styrène, d'α-méthylstyrène, de styrènes substitués sur le cycle par halogène ou méthyle, de méthacrylate de méthyle ou de mélanges de ces composés, et
B.1.2 1 à 50% d'acrylonitrile, de méthacrylonitrile, de méthacrylate de méthyle, d'anhydride maléique, de maléimides substitués par un radical alkyle en C₁-C₄ et respectivement, N-phényle, ou de mélanges de ces composés, et
B.2 5 à 95, de préférence 20 à 70% en poids de polymère à base de diène ou d'acrylate d'alkyle ou de mélanges de ceux-ci avec une température de transition vitreuse inférieure à -10°C.

7. Compositions selon la revendication 6, où B.2 est choisi parmi le polybutadiène, le polyisoprène ou des copolymères butadiène/styrène ou butadiène/acrylonitrile ou des caoutchoucs acrylate ou des mélanges de ceux-ci.

8. Compositions selon les revendications 1 à 7, contenant des (co)polymères vinyliques, des polymères d'au moins un monomère du groupe des vinylaromatiques, du cyanure vinylique, des esters d'alkyle (C₁-C₈) d'acide (méth)acryligue, d'acide carboxylique insaturé ainsi que de dérivés d'acides carboxyliques insaturés.

9. Compositions selon les revendications 1 à 8, contenant un agent anti-goutte.

10. Composition contenant :
A) 5 à 95 parties en poids de polycarbonate et/ou de polyestercarbonate aromatique
B) 1 à 60 parties en poids d'au moins un polymère greffé de
B.1 5 à 95% en poids d'un ou de plusieurs monomères vinyliques sur
B.2 5 à 95% en poids d'une ou de plusieurs bases de greffage avec une température de transition vitreuse < 10°C ;
C) 0 à 50 parties en poids d'un (co)polymère vinylique thermoplastique et/ou d'un poly(téréphtalate d'alkylène) thermoplastique ;
D) 0,5 à 25 parties en poids d'un mélange de composés du phosphore selon la revendication 1 ;
E) 0,05 à 5 parties en poids d'agent anti-goutte,
avec la condition que X¹ ou X² ou un ou plusieurs R¹, R², R³ et R⁴ sont chaque fois différents, et
que la somme des parties en poids de tous les composants s'élève à 100.

11. Utilisation des compositions selon les revendications 1 à 10 pour la préparation de pièces moulées, de feuilles ou de plaques.

12. Pièces moulées, feuilles ou plaques obtenues à partir des compositions selon les revendications 1 à 10.
